# EUROPEAN PATENT SPECIFICATION

(11) **EP 4 481 211 B1**
(45) Date of publication and mention of the grant of the patent: **04.03.2026**
(21) Application number: 24183333.4
(22) Date of filing: 20.06.2024
(51) Int. Cl.: F16B 21/08, F16B 2/24, F16B 13/04

(54) **MOUNTING ASSEMBLIES**
MONTAGEANORDNUNGEN
ENSEMBLES DE MONTAGE

(30) Priority: 22.06.2023 US 202363509706 P; 21.09.2023 US 202363584442 P; 10.06.2024 US 202418738794
(43) Date of publication of application: 25.12.2024
(73) Proprietor: HellermannTyton Corporation, Milwaukee, WI 53224 (US)
(72) Inventor: Cottrill, Jeff, Germantown, Wisconsin (US); Fish, Ethan, Milwaukee, Wisconsin (US)
(74) Representative: Hernandez, Yorck

(56) References cited:
- DE-A1- 102020 120 438
- US-A1- 2017 059 060

## Description

This application claims the benefit of U.S. Provisional Application Nos. 63/584,442, filed September 21, 2023, and 63/509,706, filed June 22, 2023.

### BACKGROUND

A mounting assembly can be utilized to secure one or more objects (e.g., wire, electrical cable, hose, tubing, pipe, fiber optic cable, conduit, wire harness assembly, and bundles thereof) together into a bundle. In many applications, it is sufficient merely to secure objects into a bundle. Such applications might include, for example, stationary electronic equipment that remains in one place and is subject to little or no vibration in use. In other applications, it is desirable not only to secure objects into a bundle but also to secure the resulting bundle to a support structure (e.g., framework, mounting surface, mount, vehicle chassis, trailer, bracket, channel, or the like). Such applications are common, for example, in automobiles, airplanes, ships, boats, and other vehicles where the bundle is likely to be subjected to severe jostling and vibration. In other applications (e.g., buildings), where vibration might not be an important consideration, it may still be desirable to secure and route objects to a support structure.

A support structure may include a surface that defines a bore (e.g., blind hole, reentrant bore, through bore, opening, orifice, aperture, slot, and the like) that may permit attachment of a bundle to the support structure. A bore may be threaded. One type of a mounting assembly that may be used to secure a bundle to a bore of a support structure is a blind hole mount fastener. A blind hole mount fastener may include a mount member and a clip member, the mount member having a head portion and a stud portion extending downwardly from the head portion and the clip member configured to be affixed to the stud portion of the mount member.

Existing blind hole mount fasteners may not provide efficient, secure retention features that provide a robust grip when applied in a reentrant bore and may not provide sufficient retention and tightness against the surface of the support structure for adequately supporting a bundled object, and the clip member may separate from the stud portion of the fastener, resulting in the detachment of the bundle from the support structure.

DE 10 2020 120438 A1 relates to a hole fastening system with a pin element and a U-shaped clamping spring element, whereby the pin element has a first hole contact surface for contact with a hole wall and a U-shaped cavity designed to receive the clamping spring element in such a way that at least one outer edge of the clamping spring element received in the cavity projects outwards through a side opening formed in a first flank of the pin element beyond the first perforated contact surface and can elastically yield inwards behind the first perforated contact surface into the cavity. The hollow space has a U-shaped insertion opening for the insertion of the clamping spring element, which U-shaped insertion opening opens into a second flank of the pin element (2), which flank is orthogonal to the first flank.

### SUMMARY

This disclosure relates generally to hardware for securing bundled objects, such as wires, cables, hoses, tubing, fiber optics, conduits, vines, etc., to a support structure (e.g., to a side of the support structure via a bore). Disclosed are aspects of blind hole mount fasteners that include a mount body and an attached clip member configured for securing the bundled objects to a support structure having a side defining a bore (e.g., blind hole, reentrant bore, through bore).

A blind hole mount fastener according to claim 1 is provided.

In some aspects, the techniques described herein relate to a blind hole mount fastener configured to retain an object to a support structure defining a bore, the blind hole mount fastener including: a mount body including: a stud portion configured to be received within the bore, the stud portion including a proximal end and a distal end, the stud portion defining a longitudinal axis between the proximal end and the distal end, the stud portion extending in a first direction from the proximal end to the distal end, the stud portion including a receiver; and a head portion configured to limit an insertion of the stud portion into the bore, the head portion attaching to the stud portion at the proximal end; and a clip member attached to the stud portion orthogonally to the first direction, the clip member attached to the stud portion at the receiver, the clip member configured to be received within the bore with the stud portion, the clip member defining an arcuate portion and at least one spring arm portion extending from the clip member.

This Summary is provided to introduce simplified concepts of blind hole mount fasteners, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of blind hole mount fasteners are described with reference to the following Drawings, in which the use of the same numbers in different instances may indicate like features and/or components.
FIG. 1 is an environmental first side view of a blind hole mount fastener.
FIG. 2A is an exploded, perspective view of the blind hole mount fastener of FIG. 1.
FIG. 2B is an exploded, opposite-side, perspective view of the blind hole mount fastener of FIG. 2A.
FIG. 3 is a perspective view of the blind hole mount fastener of FIG. 1, positioned for insertion into a blind hole.
FIG. 4 is a first end view of the blind hole mount fastener of FIG. 1.
FIG. 5 is a cross-sectional view along lines 5-5 of the blind hole mount fastener of FIG. 4.

### DETAILED DESCRIPTION

### Overview

This document describes, and the drawings illustrate, blind hole mount fasteners configured to retain an object to a support structure defining a bore (e.g., reentrant bore). In a general aspect, a blind hole mount fastener includes a mount body and a clip member. The mount body includes a head portion and a stud portion. The stud portion may extend downwardly from the head portion. The stud portion is configured for insertion into the bore and the head portion is configured to limit the insertion of the stud portion into the bore. The stud portion has a proximal end and a distal end, which define a longitudinal axis therebetween. The stud portion extends in a first direction along the longitudinal axis. The stud portion includes a receiver that is configured for receiving the clip member thereon, which enables the clip member to attach to the stud portion at the receiver orthogonal to the first direction. The clip member is configured to be received within the bore with the stud portion. In this way, the clip member is secured to the stud portion, decreasing the chances that the clip member will separate from the stud portion and result in detachment of the bundle from the support structure.

The disclosed mounting assemblies may be configured to allow the clip member and the mount body to work together to resist axial extraction of the blind hole mount fastener from the bore.

### Blind Hole Mount Fasteners

Described herein and illustrated in the Drawings are aspects of blind hole mount fasteners. A blind hole mount fastener according to this disclosure may include any combination of one or more of the following features. Optional features of one aspect described herein may be combined with other aspects to form further aspects.

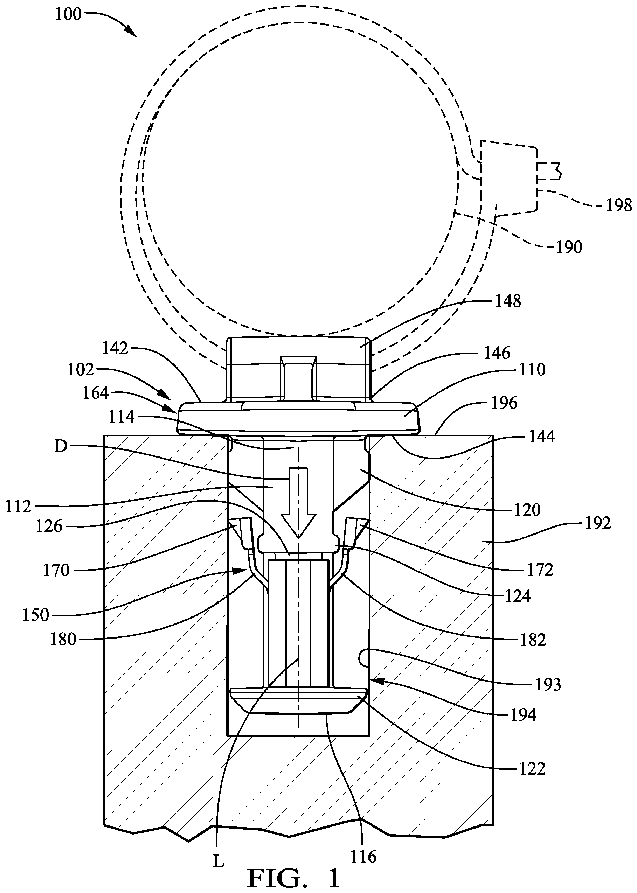

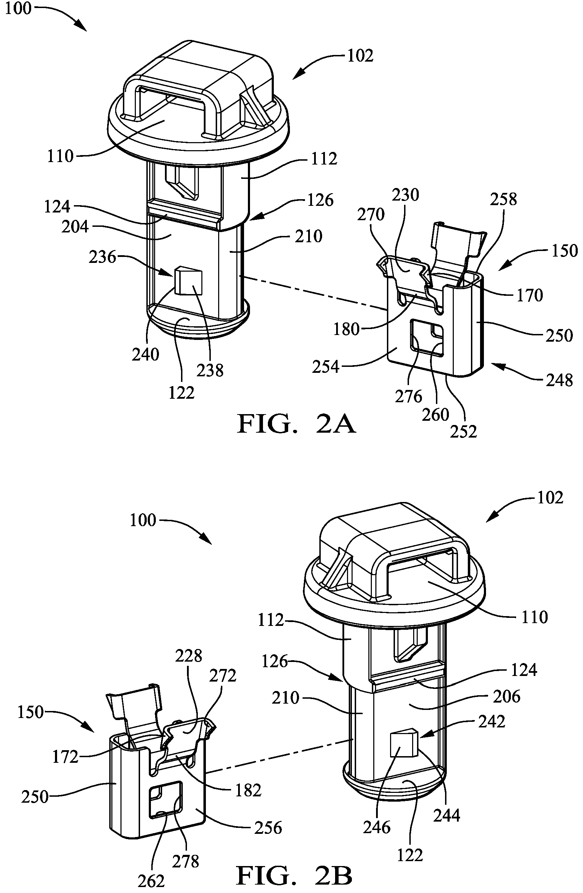

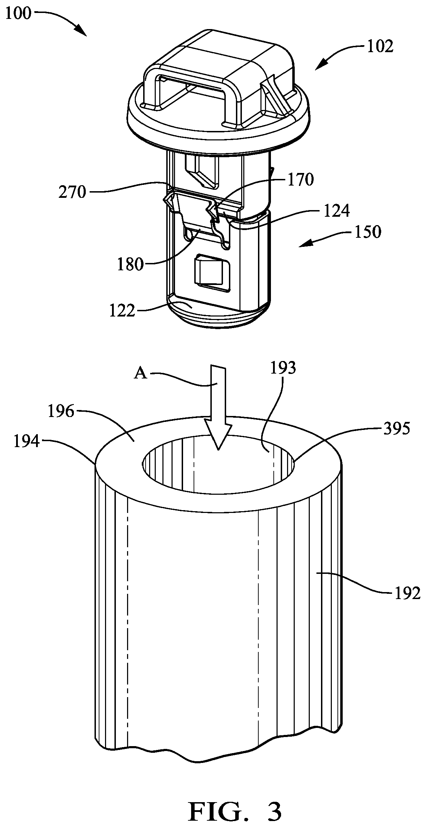

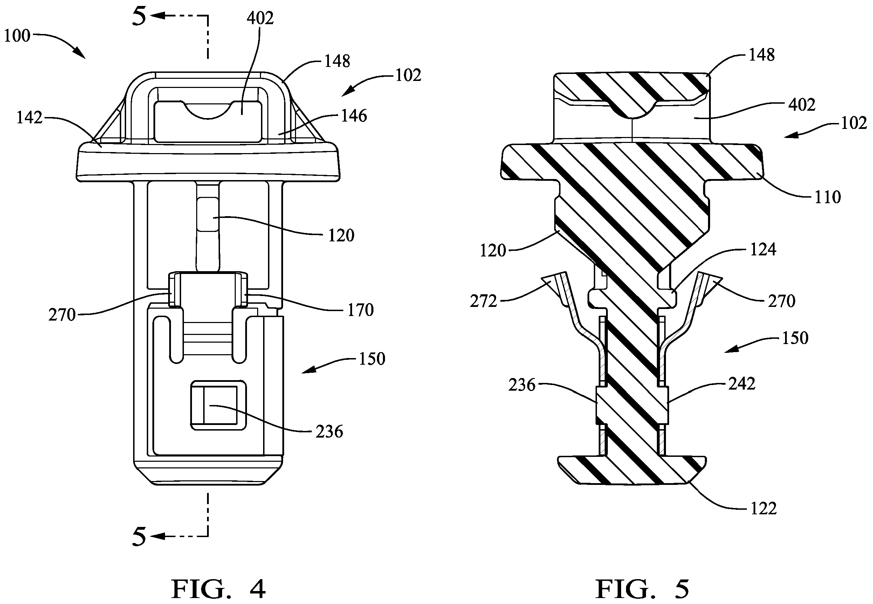

FIGs. 1-5 illustrate a first example of a blind hole mount fastener 100. FIG. 1 is an environmental view of the blind hole mount fastener 100 and illustrates a first side of the blind hole mount fastener 100. FIG. 2A is an exploded, perspective view of the blind hole mount fastener 100, and FIG. 2B is an exploded, opposite-side, perspective view of the blind hole mount fastener of FIG. 2A. FIG. 3 is a perspective view of the blind hole mount fastener of FIG. 1, positioned for insertion into a blind hole. FIG. 4 is a first end view of the blind hole mount fastener of FIG. 1, and FIG. 5 is a cross-sectional view along lines 5-5 of the blind hole mount fastener of FIG. 4.

The blind hole mount fastener 100 is configured to retain an object 190 (e.g., wire, electrical cable, hose, tubing, pipe, fiber optic cable, conduit, wire harness assembly, and bundles thereof) into a bundle and attach the object 190 to a support structure 192 (e.g., framework, mounting surface, mount, vehicle chassis, trailer, bracket, channel, or the like). The object 190 may include a bundle of objects.

The blind hole mount fastener 100 is illustrated installed in a bore 194 (e.g., reentrant bore) defined in a support structure 192. A bore may be molded, machined, or formed through another suitable process and may have a low-draft angle (e.g., 0.5°). The support structure 192 may be configured of any suitable material (e.g., aluminum (e.g., die-cast aluminum), magnesium, another metal, plastic). In FIG. 1 and FIG. 3, the bore 194 is illustrated as defined in a first side 196 of a boss of the support structure 192. In other aspects, a bore may be defined in a planar or other surface of the support structure 192. The bore 194 includes at least one wall 193 (e.g., an internal wall). In the aspect illustrated in FIGs. 1 and 3, the bore 194 is a circular reentrant bore (aka a "blind hole"). In other aspects, the bore 194 may be a through hole or a slot (e.g., an opening that is generally longer than it is wide (e.g., non-circular bores, slotted holes)) or may have another shape or structure. Likewise, the blind hole mount fastener 100, or elements thereof, may have a shape different than is illustrated in the drawings. For example, in FIGs. 1-3, the head portion 110 and the pedestal 122 are illustrated as generally circular (round) in shape. In other aspects, the head portion 110 and/or the pedestal 122 could be another shape (e.g., oval, triangular, square).

The blind hole mount fastener 100 includes a mount body 102 and a clip member 150. The clip member 150 is configured for attaching to the mount body 102. The mount body 102 includes a stud portion 112 that is configured for insertion and receipt into the bore 194. The mount body 102 also includes a head portion 110 configured to limit the insertion of the stud portion 112 into the bore 194. The stud portion 112 may extend downwardly from the head portion 110. The head portion 110 may be configured to contact the first side 196 of the support structure 192 when the stud portion 112 is inserted into the bore 194. The head portion 110 may include a circumferentially extending cap flange. The head portion 110 and the stud portion 112 may be integrally formed through an injection molding process or another suitable process.

The stud portion 112 has a proximal end 114 and a distal end 116, which define a longitudinal axis (L) therebetween. The distal end 116 is located opposite the proximal end 114. The stud portion 112 attaches to the head portion 110 at the proximal end 114, with the stud portion 112 extending in a first direction (D) along the longitudinal axis, from the proximal end 114 to the distal end 116. The head portion 110 includes a top side 142 opposite a bottom side 144. The proximal end 114 of the stud portion 112 extends in the first direction (D) from the bottom side 144 of the head portion 110.

The distal end 116 of the stud portion 112 may include a pedestal 122. The pedestal 122 may extend radially from the stud portion 112. The pedestal 122 may be configured as a stop that limits movement of the clip member 150 with respect to the longitudinal axis (L) of the stud portion 112 (e.g., in a longitudinal direction). The proximal end 114 of the stud portion 112 may include one or more ribs 120 configured for supporting the stud portion 112 in the bore 194. In aspects, the ribs(s) 120 are sized slightly smaller than an inner diameter of the bore 194.

The stud portion 112 may further include a limiter 124. In aspects, the limiter 124 extends radially from the stud portion 112 and is located between the pedestal 122 and the head portion 110. The limiter 124 may be configured as a stop that limits movement of the clip member 150 with respect to the longitudinal axis (L) of the stud portion 112 (e.g., in a longitudinal direction). In the aspect illustrated in FIGs. 1-5, the limiter 124 is an annular flange.

The stud portion 112 includes a receiver 126 that is configured to receive the clip member 150. The receiver 126 is defined between the pedestal 122 and the limiter 124. In the aspect illustrated in FIGs. 1-5, the pedestal 122 and the limiter 124 axially extend farther from the longitudinal axis of the stud portion 112 than the receiver 126. In this way, the pedestal 122 and the limiter 124 operate as stops that limit movement of the clip member 150 in the longitudinal direction.

The receiver 126 is configured for receiving the clip member 150 thereon, which enables the clip member 150 to attach to the stud portion 112 at the receiver 126 orthogonal to the first direction (D). The clip member 150 has a bottom edge 252 and a top edge 258. The bottom edge 252 may be configured to bear against the pedestal 122 and the top edge 258 may be configured to bear against the limiter 124. In this way, the clip member 150 is less likely to unseat off the stud portion 112 and result in the detachment of the bundle from the support structure.

The receiver 126 is adapted for coupling engagement with the clip member 150. The receiver 126 may have a diameter or size less than a diameter or size of the head portion 110. At the receiver 126, the stud portion 112 has a U-shaped cross-sectional shape. The U-shaped cross-sectional shape has a first planar side 204 that extends in a first plane, an edge portion 210, and a second planar side 206 that extends in a second plane. In the aspect illustrated in FIGs. 1-5, the first plane and the second plane are generally parallel. The edge portion 210 may be curved.

In aspects, the clip member 150 is configured for sliding insertion onto the stud portion 112 at the receiver 126 perpendicular to the longitudinal axis (L) of the stud portion 112. In such a configuration, the clip member 150 may be fully captured on the mount body 102 between the head portion 110 and the pedestal 122. The clip member 150 is configured to be received within the bore 194 along with the stud portion 112, as illustrated in FIG. 1 and FIG. 3. The bore 194 includes an opening 395.

In the aspect illustrated in FIGs. 1-5, the clip member 150 has an arcuate portion 248 that defines a U-shaped cross-sectional shape. In other aspects, the arcuate portion may have another cross-sectional shape. The arcuate portion 248 illustrated in the Figures includes a pair of legs (e.g., first leg 254, second leg 256) connected by a seat 250. The first leg 254 extends from the seat 250 along a first leg axis and the second leg 256 extends from the seat 250 along a second leg axis. In the aspect illustrated in FIGs. 1-5, the first leg axis and the second leg axis are generally parallel.

The leg (e.g., first leg 254, second leg 256) may include a spring arm portion configured for engaging the support structure (e.g., support structure 192) at the bore (e.g., bore 194) and resisting axial withdrawal of the stud portion (e.g., stud portion 112) from the bore. In the aspect illustrated in FIGs. 1-5, a spring arm portion 180 extends from the first leg 254 and a spring arm portion 182 extends from the second leg 256. In this aspect, the spring arm portion 180 and spring arm portion 182 are located on opposite sides of the clip member 150.

In the aspect illustrated in FIGs. 1-5, the spring arm portion 180 includes a distal end 230 and the spring arm portion 182 includes a distal end 228. A distal end may include at least one tooth configured for engaging the bore, for example, by penetrating into a wall of the bore, engaging threading in the bore, and the like. Engagement of the bore 194 allows for unidirectional movement of the stud portion 112 into an opening (e.g., opening 395 of FIG. 3) of the bore 194 in a first direction (A), illustrated in FIG. 3, to engage the side wall 193 of the bore 194 and resist movement of the stud portion 112 in an opposite direction.

A distal end may include one or more teeth. In the aspect illustrated in FIGs. 1-5, the distal end 230 includes two teeth (e.g., tooth 170, tooth 270) and the distal end 228 includes two teeth (e.g., tooth 172, tooth 272). In the aspect illustrated in FIG. 1, the tooth 170 of the spring arm portion 180 and the tooth 172 of the spring arm portion 182 engage the wall 193 of the bore 194.

A spring arm portion may include a distal end that is angled for engagement with the supporting structure (e.g., with an inside surface of the reentrant bore). A spring arm portion (e.g., spring arm portion 180, spring arm portion 182) may extend from the clip member 150 at an angle. For example, a spring arm portion may extend at an angle, relative to the longitudinal axis (L), away from a center section of the stud portion 112 when the clip member 150 is in place on the stud portion 112, as illustrated in FIG. 1. In aspects, the spring arm portions are elongated and configured to allow for low insertion force.

The clip member 150 may include a first attachment feature configured for engaging a second attachment feature on the stud portion 112 to secure the clip member 150 to the stud portion 112, the attachment features holding the clip member 150 on the stud portion 112 when the stud portion 112 and attached clip member 150 are inserted into the bore 194. One or both of the legs (e.g., leg 254, leg 256) may include a first attachment feature. In the aspect illustrated in the Figures, both legs include a first attachment feature; namely, an attachment window (e.g., attachment window 260, attachment window 262) is defined in each of the leg 254 and the leg 256. The attachment windows are adapted to mechanically engage second attachment features located on the stud portion 112 to secure the clip member 150 to the stud portion 112. An attachment window may include a lip (e.g., lip 276 of attachment window 260, lip 278 of attachment window 262) configured for retention on a ledge (e.g., ledge 240, ledge 244) of the second attachment feature.

In the aspect illustrated in the drawings, the stud portion 112 includes the second attachment feature(s). For example, in FIGs. 2A and 2B, the first planar side 204 of the stud portion 112 includes a snap-fit ramp 236 having a ledge 240 and the second planar side 206 of the stud portion 112 includes a snap-fit ramp 242 having a ledge 244. The snap-fit ramp is configured to engage an attachment window defined in the clip member 150. In the aspect illustrated in FIGs. 2A and 2B, the snap-fit ramp 236 has an angle face 238 that extends laterally outward from the first planar side 204 to the ledge 240 and the snap-fit ramp 242 has an angle face 246 that extends laterally outward from the second planar side 206 to the ledge 244. The clip member 150 is configured to slide onto the stud portion 112 at the receiver 126. When the clip member 150 is slid onto the receiver 126, the lip 276 of the attachment window 260 is deflected outward as the leg (first leg 254, second leg 256) rides down the angle face 238 and the lip 278 of the attachment window 262 is deflected outward as the second leg 256 rides down the angle face 246, with the lips configured to snap over the respective ledges at the end of the snap-fit ramps to form a snap-fit connection.

In aspects, the blind hole mount fastener 100 may include a connector section 146 that attaches to the top side 142 of the head portion 110. The connector section 146 is configured to connect with an object support 148. The object support 148 is configured to support and/or attach to a component (e.g., the object 190). The object support 148 may include one or more of a routing component, a clip, a toothed clip, a wire clip, a cable clip, a clamp, cable tie mounts, panel fasteners, a tape bar, a wire channel, saddle mounts, a cable tie saddle, wire harness anchors, a self-affixing clip fastener (e.g., connector clip, bundling clip, harness clip, ratchet P-clamp, C-clip, docking clip, tubing clip, pipe clip, edge clip, routing clip, push pin, ratchet clamps, locking clamps), and the like. The object support 148 may also include a moment arm or other structure configured to space an attached bundle apart from the assembly. In the aspect illustrated in the Figures, the object support 148 is a cable tie saddle including an aperture (e.g., slot 402) that is configured to interact with and/or adapted to receive a flexible tie (e.g., cable tie) for bundling objects, as illustrated in FIG. 1. In such a configuration, the head portion 110 is configured to provide support for a bundle while the tie is secured to the assembly through the slot 402. In the aspect illustrated in FIGs. 1-5, the object support 148 includes the slot 402 arranged to receive a fastener (e.g., cable tie 198). In FIG. 1, the cable tie 198 is illustrated in dotted-line fashion as securing the object 190 to the object support 148.

The object support 148 may attach to the object 190 via a fastener. In FIG. 1, the object support 148 is illustrated attached to the object 190 via the cable tie 198. A cable tie may include a strap (e.g., tie tail) and a tie head. The cable tie 198 may be used to wrap and secure a bundle and may be used to secure the bundle to the object support 148. The cable tie 198 may be integrally formed with the object support 148 or may be a separate piece. In other aspects, another fastener may be utilized in lieu of a cable tie.

In aspects, the blind hole mount fastener 100 may include a spring section 164 extending downwardly from the head portion 110, the spring section 164 configured to provide tension and resistance when the stud portion 112 is inserted into an opening defined in the supporting surface. The spring section 164 may taper downwardly and outwardly from a first end located at the head portion 110 to a second end. A spring section may be circular, cylindrical, or another shape that will provide the necessary resistance for the spring section. The spring section 164 may be configured to contact the first side 196 of the support structure 192 and may be located below or incorporated as part of the head portion 110 of the blind hole mount fastener 100. In such a configuration, the stud portion 112 may extend downwardly from the head portion 110 and/or the spring section 164.

### Materials

The mount body (e.g., mount body 102) may be formed of a polymer. Examples of suitable polymers for the blind hole mount fasteners disclosed herein include, but are not limited to, nylon, polyamide (PA), PA12, PA46, PA66, PA66HS, PA66UV, OUV, PA66VO, PA66HIRHS, PA66HIRHSUV, polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet (UV) stabilized polyacetal (POMUV), thermoplastic materials, higher-temperature resins, UV resistant resins, and the like, and copolymers, blends, or alloys thereof. The polymer may be glass-fiber reinforced. The polymer may include one or more additives (e.g., heat stabilizers (e.g., copper iodide), impact modifiers (e.g., polyolefin, urethane, rubber), UV stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like).

The clip member (e.g., clip member 150) may be fabricated of any rigid metal sufficient to withstand pull-out force (e.g., aluminum, spring steel).

### Conclusion

Although implementations for blind hole mount fasteners have been described in language specific to certain features and/or methods, the subject of the appended claims is not necessarily limited to the specific features or methods described. Rather, the specific features and methods are disclosed as example implementations for blind hole mount fasteners.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

## Claims

1. A blind hole mount fastener (100) configured to retain an object (190) to a support structure (192) defining a bore (194), the blind hole mount fastener (100) comprising:
a mount body (102) comprising:
a stud portion (112) configured to be received within the bore (194), the stud portion (112) including a proximal end (114) and a distal end (116), the stud portion (112) defining a longitudinal axis (L) between the proximal end (114) and the distal end (116), the stud portion (112) extending in a first direction from the proximal end (114) to the distal end (116), the stud portion (112) including a receiver (126), wherein the stud portion (112) has a U-shaped cross-sectional shape having a first planar side (204) extending in the first direction, an edge portion (210), and a second planar side (206) extending in a second direction, the first direction and the second direction generally parallel; and
a head portion (110) configured to limit an insertion of the stud portion (112) into the bore (194), the head portion (110) attaching to the stud portion (112) at the proximal end (114); and
a clip member (150) attached to the stud portion (112) orthogonally to the first direction, the clip member (150) attached to the stud portion (112) at the receiver (126), the clip member (150) configured to be received within the bore (194) with the stud portion (112), the clip member (150) defining an arcuate portion (248) and at least one spring arm portion (180, 182) extending from the clip member (150),
**characterized in that**
at least one of the first planar side (204) or the second planar side (206) includes a snap-fit ramp (236, 242) configured for engaging an attachment window (260, 262) defined in the clip member (150).

2. The blind hole mount fastener (100) of claim 1, wherein the distal end (116) of the stud portion (112) comprises:
a pedestal (122) that extends from the stud portion (112), in particular delimiting the first planar side (204) and/or the second planar side (206).

3. The blind hole mount fastener (100) of any one of the preceding claims, wherein the stud portion (112) further comprises:
a limiter (124) that extends from the stud portion (112), in particular delimiting the first planar side (204) and/or the second planar side (206).

4. The blind hole mount fastener (100) of claims 2 and 3, wherein the stud portion (112) defines the receiver (126) configured for receiving the clip member (150), the receiver (126) defined between the pedestal and the limiter, the pedestal and the limiter configured to operate as stops that limit movement of the clip member (150) with respect to the longitudinal axis (L).

5. The blind hole mount fastener (100) of any one of the preceding claims, wherein the spring arm portion (180, 182) comprises a distal end (230, 228) including at least one tooth (170, 270) configured to penetrate into a wall of the bore (194).

6. The blind hole mount fastener (100) of any one of the preceding claims, wherein the arcuate portion (248) further comprises:
a seat (250); and
a pair of legs (254, 256) extending from the seat,
wherein the pair of legs extend from the clip member (150) at an angle relative to the longitudinal axis.

7. The blind hole mount fastener (100) of the preceding claim, wherein the clip member (150) has a bottom edge (252) and a top edge (258) opposite to the bottom edge (252), in particular with bottom and top edge delimiting at least one of the first leg (254) or the second leg (256).

8. The blind hole mount fastener (100) of claim 7, wherein the bottom edge (252) is configured to bear against the pedestal (122) and/or the top edge (258) is configured to bear against the limiter (124).

9. The blind hole mount fastener (100) of any one of the preceding claims, wherein the snap-fit ramp (236, 242) has an angle face (238, 246) that extends laterally outward from one of the first or second planar sides (204, 206).

10. The blind hole mount fastener (100) of claim 6 and any one of the claims 8 to 9, wherein an inwardly projecting lip (276, 278) of the attachment window (260, 262) is deflected outward as the leg rides down the snap-fit ramp (236, 242), the lip configured for snapping over a ledge (240, 244) at an end of the snap-fit ramp (236, 242) to form a snap-fit connection.

11. The blind hole mount fastener (100) of any one of the preceding claims, wherein the head portion (110) further comprises a top side opposite a bottom side, the proximal end (114) of the stud portion (112) extending in the first direction from the bottom side of the head portion (110).

12. The blind hole mount fastener (100) of claim 11, further comprising:
a connector section attaching to the top side of the head portion (110), the connector section configured for connecting with an object support configured for attaching to an object.

13. The blind hole mount fastener (100) of any one of the preceding claims, further comprising:
an object support connected to a top side of the head portion (110), the object support configured for supporting the object.

14. The blind hole mount fastener (100) of claim 12 or 13, wherein the object support comprises a slot arranged to receive a cable tie and the connector section is configured to support the object (190) while the cable tie is secured through the slot.

15. The blind hole mount fastener (100) of any one of the preceding claims, further comprising:
a spring section (164) attaching to a bottom side of the head portion (110), the spring section configured to contact a first side of the support structure (192) and limit the insertion of the stud portion (112) into the bore (194).

## Patentansprüche

1. Eine Blindlochbefestigung (100), die dazu ausgelegt ist, einen Gegenstand (190) an einer Stützstruktur (192) zu befestigen, die eine Bohrung (194) definiert, wobei die Blindlochbefestigung (100) umfasst:
einen Befestigungskörper (102), der umfasst:
einen Bolzenabschnitt (112), der ausgebildet ist, in der Bohrung (194) aufgenommen zu werden, wobei der Bolzenabschnitt (112) ein proximales Ende (114) und ein distales Ende (116) umfasst und der Bolzenabschnitt (112) eine Längsachse (L) zwischen dem proximalen Ende (114) und dem distalen Ende (116) definiert, wobei sich der Bolzenabschnitt (112) in einer ersten Richtung vom proximalen Ende (114) zum distalen Ende (116) erstreckt, wobei der Bolzenabschnitt (112) eine Aufnahme (126) umfasst, wobei der Bolzenabschnitt (112) eine U-förmige Querschnittsform mit einer ersten ebenen Seite (204), die sich in der ersten Richtung erstreckt, einem Randabschnitt (210) und einer zweiten ebenen Seite (206) aufweist, die sich in einer zweiten Richtung erstreckt, wobei die erste Richtung und die zweite Richtung im Allgemeinen parallel sind; und
ein Kopfabschnitt (110), der ausgebildet ist, ein Einführen des Bolzenabschnitts (112) in die Bohrung (194) zu begrenzen, wobei der Kopfabschnitt (110) am proximalen Ende (114) am Bolzenabschnitt (112) befestigt ist; und
ein Clipelement (150), das orthogonal zur ersten Richtung am Bolzenabschnitt (112) befestigt ist, wobei das Clipelement (150) am Bolzenabschnitt (112) am Aufnehmer (126) befestigt ist, wobei das Clipelement (150) ausgebildet ist, zusammen mit dem Bolzenabschnitt (112) in der Bohrung (194) aufgenommen zu werden, wobei das Clipelement (150) einen bogenförmigen Abschnitt (248) und mindestens einen Federarmabschnitt (180, 182) definiert, der sich vom Clipelement (150) erstreckt,
**dadurch gekennzeichnet, dass**
mindestens eine der ersten ebenen Seite (204) oder der zweiten ebenen Seite (206) eine Schnapprampe (236, 242) aufweist, die ausgebildet ist, in ein im Clipelement (150) definiertes Befestigungsfenster (260, 262) einzugreifen.

2. Die Blindlochbefestigung (100) nach Anspruch 1, wobei das distale Ende (116) des Bolzenabschnitts (112) umfasst:
ein Sockel (122), der sich vom Bolzenabschnitt (112) erstreckt und insbesondere die erste ebene Seite (204) und/oder die zweite ebene Seite (206) begrenzt.

3. Die Blindlochbefestigung (100) nach einem der vorstehenden Ansprüche, wobei der Bolzenabschnitt (112) ferner umfasst:
einen Begrenzer (124), der sich vom Bolzenabschnitt (112) erstreckt und insbesondere die erste ebene Seite (204) und/oder die zweite ebene Seite (206) begrenzt.

4. Die Blindlochbefestigung (100) nach den Ansprüchen 2 und 3, wobei der Bolzenabschnitt (112) den Aufnehmer (126) definiert, der zum Aufnehmen des Clipelements (150) ausgebildet ist, wobei der Aufnehmer (126) zwischen dem Sockel und dem Begrenzer definiert ist, wobei der Sockel und der Begrenzer so ausgebildet sind, dass sie als Anschläge fungieren, die eine Bewegung des Clipelements (150) in Bezug auf die Längsachse (L) begrenzen.

5. Die Blindlochbefestigung (100) nach einem der vorstehenden Ansprüche, wobei der Federarmabschnitt (180, 182) ein distales Ende (230, 228) mit mindestens einem Zahn (170, 270) umfasst, der ausgebildet ist, in eine Wand der Bohrung (194) einzudringen.

6. Die Blindlochbefestigung (100) nach einem der vorstehenden Ansprüche, wobei der bogenförmige Abschnitt (248) ferner umfasst:
einen Sitz (250); und
ein Paar Schenkel (254, 256), die sich von dem Sitz erstrecken,
wobei sich das Paar Schenkel in einem Winkel relativ zur Längsachse vom Clipelement (150) erstreckt.

7. Die Blindlochbefestigung (100) nach dem vorstehenden Anspruch, wobei das Clipelement (150) eine Unterkante (252) und eine der Unterkante (252) gegenüberliegende Oberkante (258) aufweist, insbesondere wobei die Unter- und Oberkante mindestens eines des ersten Schenkels (254) oder des zweiten Schenkels (256) begrenzen.

8. Die Blindlochbefestigung (100) nach Anspruch 7, wobei die Unterkante (252) ausgebildet ist, gegen den Sockel (122) zu drücken, und/oder die Oberkante (258) ausgebildet ist, gegen den Begrenzer (124) zu drücken.

9. Die Blindlochbefestigung (100) nach einem der vorstehenden Ansprüche, wobei die Schnapprampe (236, 242) eine Winkelebene (238, 246) aufweist, die sich seitlich nach außen von einer der ersten oder zweiten ebenen Seiten (204, 206) erstreckt.

10. Die Blindlochbefestigung (100) nach Anspruch 6 und einem der Ansprüche 8 bis 9,
wobei eine nach innen gerichtete Lippe (276, 278) des Befestigungsfensters (260, 262) nach außen ausgelenkt wird, wenn der Schenkel die Schnapprampe (236, 242) hinuntergleitet, wobei die Lippe ausgebildet ist, über eine Kante (240, 244) an einem Ende der Schnapprampe (236, 242) einzurasten, um eine Schnappverbindung zu bilden.

11. Die Blindlochbefestigung (100) nach einem der vorstehenden Ansprüche, wobei der Kopfabschnitt (110) ferner eine einer Unterseite gegenüberliegende Oberseite umfasst, wobei sich das proximale Ende (114) des Bolzenabschnitts (112) in der ersten Richtung von der Unterseite des Kopfabschnitts (110) erstreckt.

12. Die Blindlochbefestigung (100) nach Anspruch 11, die ferner umfasst:
einen Verbindungsabschnitt, der an der Oberseite des Kopfabschnitts (110) befestigt ist, wobei der Verbindungsabschnitt zum Verbinden mit einer Objekthalterung ausgebildet ist, die zum Befestigen an einem Objekt konfiguriert ist.

13. Die Blindlochbefestigung (100) nach einem der vorstehenden Ansprüche, ferner umfassend:
eine Objekthalterung, die mit einer Oberseite des Kopfabschnitts (110) verbunden ist, wobei die Objekthalterung zum Halten des Objekts konfiguriert ist.

14. Die Blindlochbefestigung (100) nach Anspruch 12 oder 13, wobei die Objekthalterung einen Schlitz umfasst, der zur Aufnahme eines Kabelbinders angeordnet ist, und der Verbindungsabschnitt so konfiguriert ist, dass er das Objekt (190) stützt, während der Kabelbinder durch den Schlitz gesichert ist.

15. Die Blindlochbefestigung (100) nach einem der vorstehenden Ansprüche, die ferner umfasst:
einen Federabschnitt (164), der an einer Unterseite des Kopfabschnitts (110) angebracht ist, wobei der Federabschnitt so konfiguriert ist, dass er eine erste Seite der Stützstruktur (192) berührt und das Einführen des Bolzenabschnitts (112) in die Bohrung (194) begrenzt.

## Revendications

1. Une fixation à montage à trou borgne (100) configurée pour retenir un objet (190) sur une structure de support (192) définissant un alésage (194), la fixation à montage à trou borgne (100) comprenant :
un corps de fixation (102) comprenant :
une partie de goujon (112) configurée pour être reçue dans l'alésage (194), la partie de goujon (112) comprenant une extrémité proximale (114) et une extrémité distale (116), la partie de goujon (112) définissant un axe longitudinal (L) entre l'extrémité proximale (114) et l'extrémité distale (116), la partie de goujon (112) s'étendant dans une première direction depuis l'extrémité proximale (114) vers l'extrémité distale (116), la partie de goujon (112) comprenant un récepteur (126), dans lequel la partie de goujon (112) a une forme en coupe transversale en U avec un premier côté plan (204) s'étendant dans la première direction, une partie de bord (210) et un deuxième côté plan (206) s'étendant dans une deuxième direction, la première direction et la deuxième direction étant généralement parallèles ; et
une partie de tête (110) configurée pour limiter une insertion de la partie de goujon (112) dans l'alésage (194), la partie de tête (110) se fixant à la partie de goujon (112) au l'extrémité proximale (114); et
un élément de clip (150) fixé à la partie de goujon (112) orthogonalement à la première direction, l'élément de clip (150) étant fixé à la partie de goujon (112) au récepteur (126), l'élément de clip (150) étant configuré pour être reçu dans l'alésage (194) avec la partie de goujon (112), l'élément de clip (150) définissant une partie arquée (248) et au moins une partie de bras à ressort (180, 182) s'étendant à partir de l'élément de clip (150),
**caractérisé en ce que**
au moins l'un du premier côté plan (204) ou du deuxième côté plan (206) comprend une rampe d'encliquetage (236, 242) configurée pour s'engager dans une fenêtre de fixation (260, 262) définie dans l'élément de clip (150).

2. La fixation à montage à trou borgne (100) selon la revendication 1, dans laquelle l'extrémité distale (116) de la partie de goujon (112) comprend :
un socle (122) qui s'étend à partir de la partie de goujon (112), délimitant en particulier le premier côté plan (204) et/ou le deuxième côté plan (206).

3. La fixation à montage à trou borgne (100) selon l'une quelconque des revendications précédentes, dans laquelle la partie de goujon (112) comprend en outre:
un limiteur (124) qui s'étend à partir de la partie tige (112), délimitant en particulier le premier côté plan (204) et/ou le deuxième côté plan (206).

4. La fixation à montage à trou borgne (100) selon les revendications 2 et 3, dans laquelle la partie de goujon (112) définit le récepteur (126) configuré pour recevoir l'élément de clip (150), le récepteur (126) étant défini entre le socle et le limiteur, le socle et le limiteur étant configurés pour fonctionner comme des butées qui limitent mouvement de l'élément de clip (150) par rapport à l'axe longitudinal (L).

5. La fixation à montage à trou borgne (100) selon l'une quelconque des revendications précédentes, dans laquelle la partie de bras à ressort (180, 182) comprend une extrémité distale (230, 228) comprenant au moins une dent (170, 270) configurée pour pénétrer dans une paroi de l'alésage (194).

6. La fixation à montage à trou borgne (100) selon l'une quelconque des revendications précédentes, dans laquelle la partie arquée (248) comprend en outre:
un siège (250) ; et
une paire de pattes (254, 256) s'étendant à partir du siège,
dans laquelle la paire de pattes s'étend à partir de l'élément de clip (150) selon un angle par rapport à l'axe longitudinal.

7. La fixation à montage à trou borgne (100) selon la revendication précédente, dans laquelle l'élément de clip (150) comporte un bord inférieur (252) et un bord supérieur (258) opposé au bord inférieur (252), en particulier avec les bords inférieur et supérieur délimitant au moins l'une des première patte (254) ou deuxième patte (256).

8. La fixation à montage à trou borgne (100) selon la revendication 7, dans laquelle le bord inférieur (252) est configuré pour s'appuyer contre le socle (122) et/ou le bord supérieur (258) est configuré pour s'appuyer contre le limiteur (124).

9. La fixation à montage à trou borgne (100) selon l'une quelconque des revendications précédentes, dans laquelle la rampe d'encliquetage (236, 242) présente une face inclinée (238, 246) qui s'étend latéralement vers l'extérieur à partir de l'un des premier et deuxième côtés plans (204, 206).

10. La fixation à montage à trou borgne (100) de la revendication 6 et de l'une quelconque des revendications 8 à 9,
dans laquelle une lèvre saillante vers l'intérieur (276, 278) de la fenêtre de fixation (260, 262) est déviée vers l'extérieur lorsque la patte descend le long de la rampe d'encliquetage (236, 242), la lèvre étant configurée pour s'encliqueter sur un rebord (240, 244) à une extrémité de la rampe d'encliquetage (236, 242) afin de former une connexion par encliquetage.

11. La fixation à montage à trou borgne (100) de l'une quelconque des revendications précédentes, dans laquelle la partie de tête (110) comprend en outre un côté supérieur opposé à un côté inférieur, l'extrémité proximale (114) de la partie de goujon (112) s'étendant dans la première direction à partir du côté inférieur de la partie de tête (110).

12. La fixation à montage à trou borgne (100) de la revendication 11, comprenant en outre:
une section de connexion fixée au côté supérieur de la partie de tête (110), la section de connexion étant configurée pour se connecter à un support d'objet configuré pour se fixer à un objet.

13. La fixation à montage à trou borgne (100) selon l'une quelconque des revendications précédentes, comprenant en outre:
un support d'objet relié à la partie supérieure de la partie formant tête (110), le support d'objet étant configuré pour supporter l'objet.

14. La fixation à montage à trou borgne (100) selon la revendication 12 ou 13, dans laquelle le support d'objet comprend une fente est configurée pour recevoir un serre-câble et la section de connexion est configurée pour supporter l'objet (190) tandis que le serre-câble est fixé à travers la fente.

15. La fixation à montage à trou borgne (100) de l'une quelconque des revendications précédentes, comprenant en outre:
une section à ressort (164) fixée à une côté inférieure de la partie de tête (110), la section à ressort étant configurée pour entrer en contact avec une première face de la structure de support (192) et limiter l'insertion de la partie de goujon (112) dans l'alésage (194).
